# EUROPÄISCHE PATENTSCHRIFT

(11) **EP 4 014 919 B1**
(45) Veröffentlichungstag und Bekanntmachung des Hinweises auf die Patenterteilung: **13.09.2023**
(21) Anmeldenummer: 20214681.7
(22) Anmeldetag: 16.12.2020
(51) Int. Cl.: A61C 5/00, A61C 19/00

(54) **DENTALSENSOR MIT EINEM BEFESTIGUNGSSYSTEM**
DENTAL SENSOR WITH A FASTENING SYSTEM
CAPTEUR DENTAIRE AVEC SYSTÈME DE FIXATION

(43) Veröffentlichungstag der Anmeldung: 22.06.2022
(73) Patentinhaber: Ivoclar Vivadent AG, 9494 Schaan (LI)
(72) Erfinder: SENTI, Theresa Sujata Maria, 9497 Triesenberg (LI); MÜLLER, Frank, 6800 Feldkirch (AT); SCHÜLKE, Andreas, 9472 Grabs (LI); GROSSE-HONEBRINK, Alexander, 9320 Arbon (CH)
(74) Vertreter: Baldus, Oliver

(56) Entgegenhaltungen:
- DE-A1-102018 132 984
- US-A- 4 202 328
- US-A- 4 318 694

## Beschreibung

Die vorliegende Erfindung betrifft ein Dentalsensor mit einem Befestigungssystem für den Dentalsensor, Heutige intraorale Befestigungsmöglichkeiten sind mechanisch durch Klemmen oder chemisch durch Adhäsion realisiert. Bekannte Klemmverfahren beinhalten beispielsweise Klemmen, die um einen oder mehrere Zähne gelegt werden, dentale Aligner, die den ganzen oder Teile des Zahnbogens umfassen, oder Bänder, die um einen oder mehrere Zähne gelegt werden. Eine Adhäsion von Fremdkörpern wird mittels Klebemittel oder Zement erreicht. Eine weitere reversible Möglichkeit der Befestigung besteht in der Verwendung von Haftcreme.

DE102018132984 betrifft ein interdental verankerbares Fixationssystem, dessen Fügemittel einen Zahnzwischenraum durchragt, an dessen beiden Enden flanschartige, kugelige, runde, ovale, längliche, polygonale o.ä. gestaltete Köpfe angeordnet sind, von denen mindestens einer der Anbringung von Befestigungsmitteln dienen kann.

Es ist daher die technische Aufgabe der vorliegenden Erfindung, einen Dentalsensor mit Befestigungssystem bereitzustellen, das einfach und schnell befestigt werden kann.

Diese Aufgabe wird durch Gegenstände nach den unabhängigen Ansprüchen gelöst. Technisch vorteilhafte Ausführungsformen sind Gegenstand der abhängigen Ansprüche, der Beschreibung und der Zeichnungen.

Gemäß einem ersten Aspekt wird die technische Aufgabe durch einen Dentalsensor mit Befestigungssystem gelöst, mit einem Querverbinder zum Durchführen durch einen Zahnzwischenraum; und einem Stützelement zum Abstützen des Querverbinders an den Zähnen seitlich des Zahnzwischenraums. Das Befestigungssystem ermöglicht eine intraorale Befestigung des Dentalsystems, ohne die Zahnsubstanz zu schädigen. Zudem ist die Befestigung einfach reversibel. Mit Hilfe des Befestigungssystems können Dentalsensoren sicher, temporär, aber auch dauerhaft befestigt werden.

In einer technisch vorteilhaften Ausführungsform des Befestigungssystems weist der Querverbinder ein Sägezahnprofil oder ein Gewinde zum Aufdrehen einer Mutter auf. Dadurch wird beispielsweise der technische Vorteil erreicht, dass der Querverbinder in unterschiedlicher Länge mit dem Stützelement gekoppelt werden kann.

In einer weiteren technisch vorteilhaften Ausführungsform des Befestigungssystems weist das Stützelement ein Rastmittel zum Eingreifen in das Sägezahnprofil des Querverbinders auf. Ein weiteres Stützelemente kann fest mit dem Querverbinder verbunden sein. Dadurch wird beispielsweise der technische Vorteil erreicht, dass sich das Stützelement variabel und schnell an dem Querverbinder befestigen lässt.

In einer weiteren technisch vorteilhaften Ausführungsform des Befestigungssystems ist zwischen dem Querverbinder und dem Stützelement eine Drehverbindung angeordnet. Dadurch wird beispielsweise der technische Vorteil erreicht, dass der Querverbinder und das Stützelement unverlierbar miteinander verbunden sind.

In einer weiteren technisch vorteilhaften Ausführungsform des Befestigungssystems weist das Stützelement eine Keilform auf. Dadurch wird beispielsweise der technische Vorteil erreicht, dass eine Klemmwirkung am Zahn verbessert wird.

In einer weiteren technisch vorteilhaften Ausführungsform des Befestigungssystems ist der Querverbinder zugelastisch und/oder der Querverbinder ist bandförmig oder stiftförmig. Dadurch wird beispielsweise der technische Vorteil erreicht, dass kontinuierlich eine Kraft auf das Stützelement ausgeübt werden kann und der Querverbinder gut durch den Zahnzwischenraum geführt werden kann.

In einer weiteren technisch vorteilhaften Ausführungsform des Befestigungssystems ist der Querverbinder und/oder das Stützelement porös ausgestaltet. Dadurch wird beispielsweise der technische Vorteil erreicht, dass ein Speichelfluss nur wenig eingeschränkt ist und an einen Dentalsensor herangeführt werden kann.

In einer weiteren technisch vorteilhaften Ausführungsform des Befestigungssystems umfasst der Querverbinder, der Dentalsensor und/oder das Sensorgehäuse ein oder mehrere Kanäle. Dadurch wird beispielsweise der technische Vorteil erreicht, dass ein Speichelfluss nur wenig eingeschränkt ist und an einen Dentalsensor herangeführt werden kann.

In einer weiteren technisch vorteilhaften Ausführungsform des Befestigungssystems umfasst der Querverbinder ein weiteres Stützelement zum Abstützen an den Zähnen. Dadurch wird beispielsweise der technische Vorteil erreicht, dass eine flexible Befestigungsmöglichkeit geschaffen wird.

In einer weiteren technisch vorteilhaften Ausführungsform des Befestigungssystems umfasst der Querverbinder und/oder das Stützelement einen Steckmechanismus zum Aufstecken des Dentalobjekts. Der Steckmechanismus kann durch eine herausstehendes Verbindungsmittel gebildet sein. Dadurch wird beispielsweise der technische Vorteil erreicht, dass unterschiedliche Dentalobjekte am dem Befestigungssystem angebracht werden können.

In einer weiteren technisch vorteilhaften Ausführungsform des Befestigungssystems umfasst das Stützelement eine Öffnung zum Durchführen des Querverbinders. Dadurch wird beispielsweise der technische Vorteil erreicht, dass eine schnelle Verbindung 4 zwischen dem einzelnen Stützelement und dem Querverbinder erreicht wird.

In einer weiteren technisch vorteilhaften Ausführungsform des Befestigungssystems umfasst der Querverbinder einen umlaufenden Stützrand zum Abstützen an einem Öffnungsrand. Dadurch wird beispielsweise der technische Vorteil erreicht, dass der Querverbinder fest und sicher an einer vorgesehenen Stelle an dem Stützelement fixiert werden kann.

In einer weiteren technisch vorteilhaften Ausführungsform des Befestigungssystems umfasst der Querverbinder einen konischen Abschnitt zum Einführen des Stützrandes in die Öffnung. Dadurch wird beispielsweise der technische Vorteil erreicht, dass ein Einstecken und eine Befestigung an der Nut vereinfacht wird.

In einer weiteren technisch vorteilhaften Ausführungsform des Befestigungssystems umfasst der Querverbinder einen Einfädelabschnitt zum Einfädeln des Querverbinders in die Öffnung. Dadurch wird beispielsweise der technische Vorteil erreicht, dass ein Zusammensetzen des Befestigungssystems erleichtert wird.

In einer weiteren technisch vorteilhaften Ausführungsform des Befestigungssystems ist das Stützelement derart elastisch, dass sich dieses durch einen Zug des Querverbinders in den Zahnzwischenraums bewegt. Dadurch wird beispielsweise der technische Vorteil erreicht, dass eine größere Haftung des Befestigungssystems erreicht wird.

Auch offenbart ist ein Verfahren zum Befestigen eines Dentalobjekts, mit den Schritten eines Durchführens eines Querverbinders durch einen Zahnzwischenraum; und eines Abstützens des Querverbinders durch ein Stützelement zum Abstützen an den Zähnen seitlich des Zahnzwischenraums. Dadurch werden die gleichen technischen Vorteile wie durch den erfindungsgemäßen Dentalsensor mit Befestigungssystem den Dentalsensor erreicht.

Ausführungsbeispiele der Erfindung sind in den Zeichnungen dargestellt und werden im Folgenden näher beschrieben.

Es zeigen:
- Fig. 1: eine schematische Ansicht eines Befestigungssystems für ein Dentalobjekt;
- Fig. 2: eine schematische Ansicht des Befestigungssystems für ein Dentalobjekt in Verbindung mit einem Dentalsensor;
- Fig. 3: eine schematische Ansicht eines weiteren Befestigungssystems für ein Dentalobjekt in Verbindung mit einem Dentalsensor;
- Fig. 4: eine schematische Ansicht eines weiteren Befestigungssystems für ein Dentalobjekt;
- Fig. 5: eine schematische Ansicht eines weiteren Befestigungssystems für ein Dentalobjekt mit Durchgangsöffnungen;
- Fig. 6: eine schematische Ansicht eines weiteren Befestigungssystems für ein Dentalobjekt in Verbindung mit einem Dentalsensor;
- Fig. 7: eine vergrößerte Ansicht eines weiteren Befestigungssystems für ein Dentalobjekt; und
- Fig. 8: ein Blockdiagramm eines Verfahrens zum Befestigen eines Dentalobjekts.

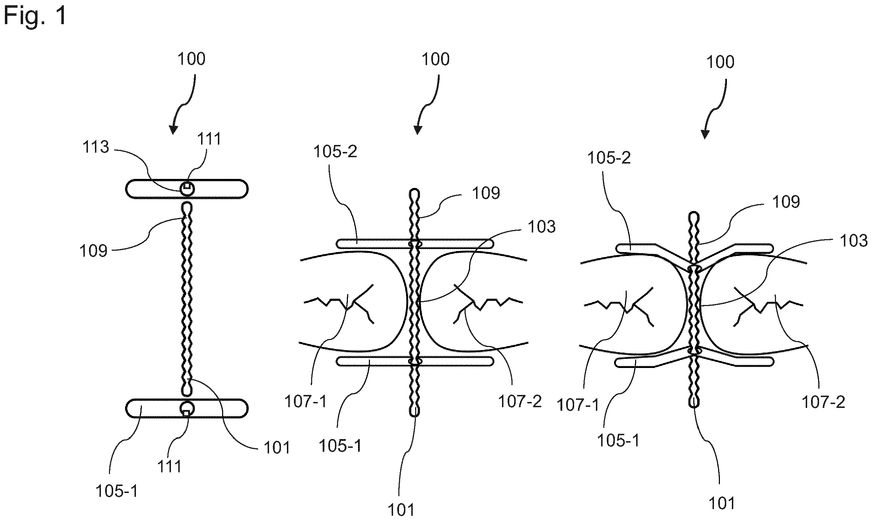

Fig. 1 zeigt eine schematische Ansicht eines Befestigungssystems 100 für ein Dentalobjekt. Das Befestigungssystem 100 umfasst einen Querverbinder 101 zum Durchführen durch einen Zahnzwischenraum 103 und zwei Stützelemente 105-1 und 105-2 zum Abstützen des Querverbinders 101 an den Zähnen 107-1, 107-2 seitlich des Zahnzwischenraums 103.

Als Stützelemente 105 werden Platten verwendet, die lingual und palatinal als Sicherung auf der Gegenseite der Zähne 107-1 und 107-2 dienen. Eine Verbindung von innerer- und äußerer Platte erfolgt interdental in einem Zahnzwischenraum 103 mit einem runden Stift aus Kunststoff oder Silikon als Querverbinder 101. Der Querverbinder 101 übt einen Zug auf die beiden Stützelemente 105-1 und 105-2 aus, so dass das Befestigungssystem an den Zähnen 107-1 und 107-2 gehalten wird. Der Querverbinder 101 und die Stützelemente 105-1 und 105-2 können beispielsweise aus entsprechenden Kunststoffteilen gebildet sein.

Der stiftförmige Querverbinder 101 weist in Längsrichtung ein Sägezahnprofil 109 auf. Der Querverbinder 101 wird durch Löcher mit definiertem Durchmesser in den Stützelementen 105 gezogen, die sich interdental befinden und ein Rastmittel 111 zum Eingreifen in das Sägezahnprofil 109 des Querverbinders 101 aufweisen. Das Rastmittel 111 kann in einer Öffnung 113 angeordnet sein, in die der Querverbinder 101 gesteckt wird.

Auf diese Weise wird ein Rastmechanismus ähnlich dem eines Kabelbinders realisiert, mit dem Befestigungssystem 100 schnell und sicher durch Zuziehen befestigt werden kann. Ein überstehendes Material des Querverbinder 101 wird abgeschnitten oder verschliffen. Das Befestigungssystems 100 gewährleistet einen sicheren Halt eines Sensorgehäuses.

Der stiftförmige Querverbinder 101 kann jedoch statt einem Sägezahnprofil 109 auch ein Gewinde zum Aufdrehen einer Mutter umfassen. In diesem Fall kann das Stützelement 105 mittels einer Mutter an dem Querverbinder 101 oder einem Dentalobjekt befestigt werden. Der Querverbinder 101 wird mit dem Gewinde durch die Öffnung 113 im Stützelement 105-1 oder 105-2 geführt und anschließend durch eine Mutter fixiert, die auf das Gewinde aufgedreht wird.

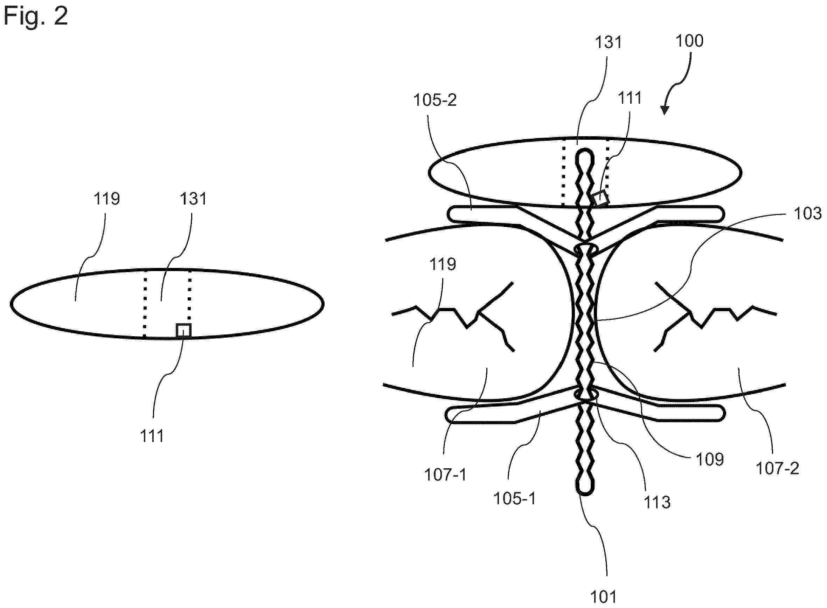

Fig. 2 zeigt eine schematische Ansicht des erfindungsgemäßen Dentalsensor (119) mit Befestigungssystems 100. Das Befestigungssystem 100 umfasst zwei weiche und elastische Stützelemente 105-1 und 105-2, die in der Mitte eine Öffnung 113 mit dem Rastmittel 111 umfassen. Auf diese Weise kann eine aufsteckbare Verrastung in der Art eines Kabelbinders realisiert werden, bei der der Querverbinder 101 einen Kabelbinder ohne Kopf darstellt.

Die Stützelemente 105-1 und 105-2 sind derart elastisch, dass sich dieses durch den Zug des Querverbinders 101 in den Zahnzwischenraums 103 bewegen lassen. Dadurch entsteht eine Klemmwirkung, die die Fixierung des Befestigungssystems 100 verbessert.

Der Dentalsensor 119 umfasst beispielsweise ein Gehäuse, das an einen Träger mit lichthärtenden Schienenmaterial adaptiert wird. Hierdurch wird eine genaue Anpassung des Gehäuses an die Physiologie des Trägers in kurzer Zeit erreicht. Das Gehäuse kann auf Basis gewonnener Scan-Daten an die jeweilige Mundsituation angepasst werden.

Der Dentalsensor 119 umfasst einen Kanal 131 mit einem Rastmittel 111 zum Eingreifen in das Sägezahnprofil 109 des Querverbinders 101. Wird der Dentalsensor 119 mit dem Kanal 131 auf den herausstehenden Querverbinder 101 geschoben, rastet dieser automatisch auf dem Sägezahnprofil 109 des Querverbinders 101 ein. Durch die exakte Fixierung des Dentalsensor 119 wird zudem das Tragen über Nacht ermöglicht. Das Befestigungssystem 100 bildet eine Möglichkeit den Dentalsensor 119 mit einem Gehäuse und Elektronik im Mund an den Zähnen zu befestigen. Das Gehäuse kann aus Splintmaterial gedruckt sein.

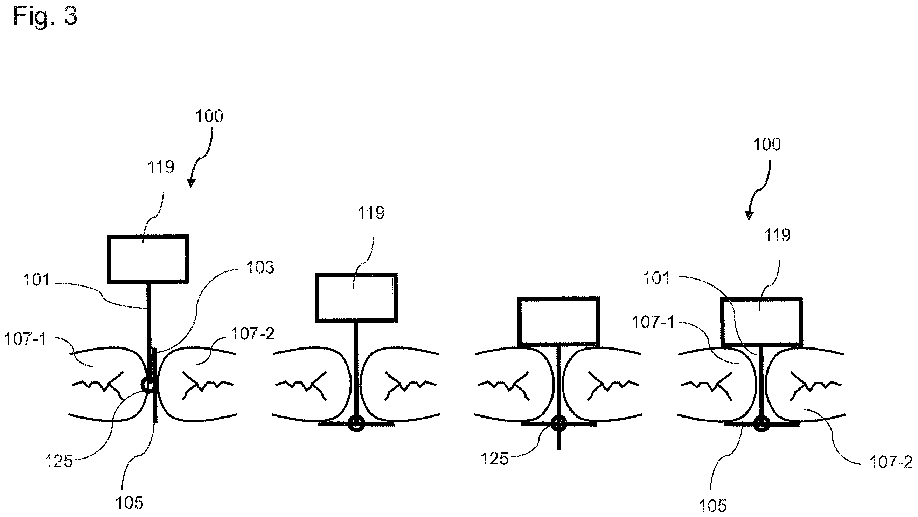

Fig. 3 zeigt eine schematische Ansicht eines weiteren Dentalsensors 119 mit Befestigungssystem 100. Der Querverbinder 101, der durch einen Silikonstift gebildet ist, wird mittels einer Fangvorrichtung an den Zähnen 107-1 und 107-2 befestigt werden. Dazu wird ein bewegliches Stützelement 105 mittels eines einer Drehverbindung 125 am Querverbinder 101 angebracht, das um 90 Grad verdreht werden kann. In dieser Position kann das Befestigungssystem 100 durch den Zahnzwischenraum 103 geschoben werden. Die Drehverbindung 125 zwischen dem Querverbinder 101 und dem Stützelement 105 kann mittels eines Rings realisiert werden, der an dem Querverbinder 101 oder dem Stützelement 105 angeordnet ist.

Danach wird das Stützelement 105 in T-Stellung ausgeklappt, so dass der Querverbinder 101 an den Zähnen 107-1 und 107-2 abgestützt werden kann. Dadurch wird der Sensor 119 am Zahn gehalten. Hier ist kann es auch vorgesehen sein, dass der Dentalsensor 119 vorab an ein Rastmittel am Querverbinder 101 angebracht wird und zerstörungsfrei wieder abgenommen werden kann.

In diesem Fall kann der Querverbinder 101 zugelastisch sein, so dass sich dieser beim Ausüben eines Zugs derart verlängert, dass das drehbar gelagerte Stützelement 105 umgeklappt werden kann. Allerdings kann der Querverbinder 101 auch eine Länge aufweisen, die zusätzlich die halbe Länge des Stützelementes 105 umfasst, damit der Mechanismus der Drehverbindung funktioniert und das Stützelement 105 umgeklappt werden kann. Eine Überlänge nach dem Umklappen kann mittels eines verschiebbaren Rastmittels 111 beseitigt werden, dass in dem Dentalsensor 119 oder der Drehverbindung 125 angeordnet ist. Hierzu kann der Querverbinder 101 mit den Sägezahnprofil 109 an einer Seite einer Fläche des Dentalsensors 119 fest befestigt sein.

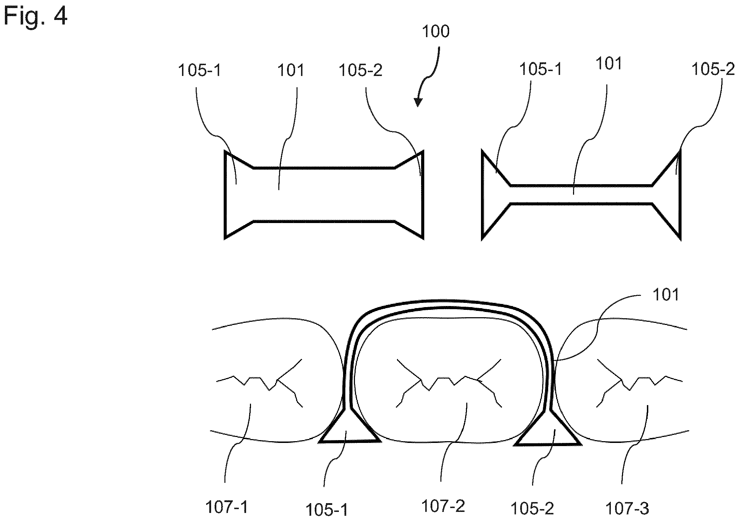

Fig. 4 zeigt eine schematische Ansicht eines weiteren Befestigungssystems 100 für ein Dentalobjekt. In dieser Ausführungsform wird der Querverbinder 101 durch ein elastisches Band gebildet, das in den Zahnzwischenraum 103 gelegt wird.

Als Stützelemente 105-1 und 105-2 sind an dem elastischen Band zwei elastische Keile gebildet. Die Stützelemente 105-1 und 105-2 sind einstückig zu dem Querverbinder 101 gebildet. Der erste Keil wird zwischen zwei Zähne 107-1 und 107-2 gelegt, das Band um den Zahn 107-2 gelegt und mit dem zweiten Keil zwischen den Zähnen 107-2 und 107-3 fixiert. Durch die Spannung des elastischen Bandes und der Keile wird das Befestigungssystem 100 fixiert. Zudem kann eine raue Oberfläche vorgesehen sein, die für eine zusätzliche Haftung am Zahn 107-2 sorgt.

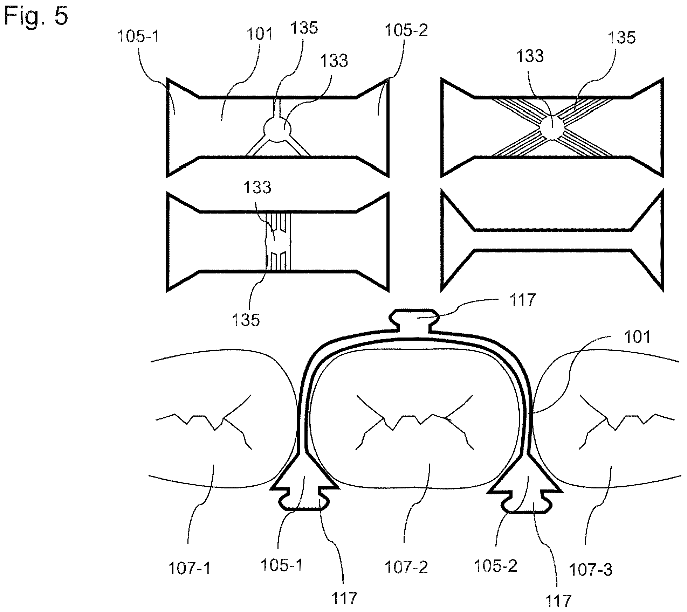

Fig. 5 zeigt eine schematische Ansicht eines weiteren Befestigungssystems 100 für ein Dentalobjekt mit einer Durchgangsöffnung 133 und Kanälen 135. Die Durchgangsöffnung 133 ist in dem Querverbinder 101 angeordnet und ermöglicht, dass ein Dentalsensor 119 Messungen indirekt am Zahn 107 durchführt.

Um die Durchgangsöffnung 133 zu belüften und Flüssigkeit wie beispielsweise Speichel, abzuführen, sind in der Oberfläche des Querverbinders Kanäle 135 vorgesehen, die durch entsprechende V-förmige oder U-Förmige Vertiefungen im Querverbinder realisiert werden. Die Kanäle 135 können waagerecht, diagonal oder senkrecht verlaufen. Die Kanäle 135 können auch in dem Dentalsensor und/oder dem Dentalsensorgehäuse vorgesehen sein.

Beispielsweise kann ein vertikaler Kanal 135 vorgesehen sein, der von einer Seite in die Durchgangsöffnung 133 tritt und Luft zuführt. Zwei diagonale Kanäle 135 leiten die Flüssigkeit aus der Durchgangsöffnung 133 seitlich zur anderen Seite heraus. Allerdings können mehrere Kanäle 135 auch parallel verlaufen und von einer Seite in die Durchgangsöffnung 133 hineintreten und auf einer anderen Seite aus dieser heraustreten. Zudem können mehrere Kanäle 135 auch parallel und diagonal angeordnet sein, so dass sich diese im Bereich der Durchgangsöffnung 133 kreuzen.

Zudem umfasst der Querverbinder 101 und die beiden Stützelemente 105-1 und 105-2 einen Steckmechanismus 117, auf den das Dentalobjekt oder der Dentalsensor 119 aufsteckbar ist. Der Steckmechanismus 117 ist einstückig an dem Querverbinder 101 und/den beiden Stützelementen 105-1 und 105-2 in Form eines herausstehenden Verbindungsmittels gebildet. Durch den Steckmechanismus 117 kann eine Rastfunktion realisiert werden. dadurch können mehrere Sensoreinheiten gleichzeitig an den Steckmechanismen 117 angebracht werden.

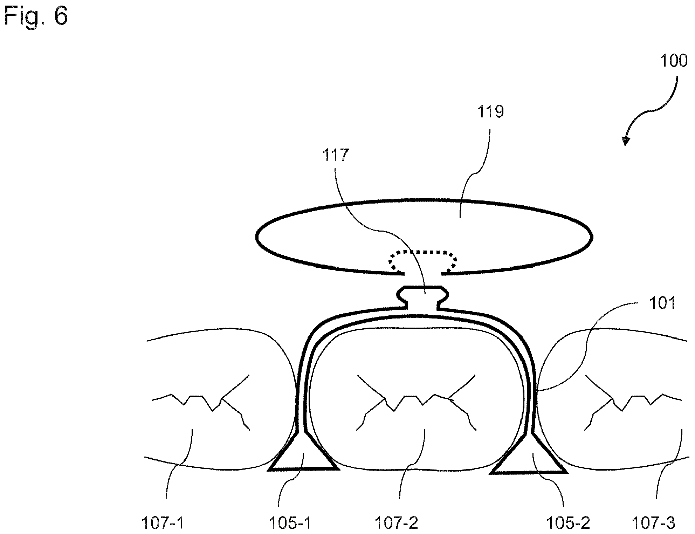

Fig. 6 zeigt eine schematische Ansicht eines weiteren Befestigungssystems 100 für ein Dentalobjekt in Verbindung mit einem Dentalsensor 119. Der bandförmige Querverbinder 101 mit den keilförmigen Stützelemente 105-1 und 105-2 umfasst einen Steckmechanismus 117. Der Steckmechanismus 117 bildet ein Verbindungselement für den Dentalsensor 119, wie beispielsweise eine Noppe für einen Druckknopf. Der Steckmechanismus 117 dient dazu, dass der Dentalsensor 119 aufgesteckt, eingefädelt oder auf andere Weise befestigt werden kann.

Die Oberflächen der einzelnen Komponenten können auf der Seite, die am Zahn 107-1 und 107-2 anliegt, rau gestaltet sein, damit diese besser haften und nicht an der glatten Oberfläche abrutschen.

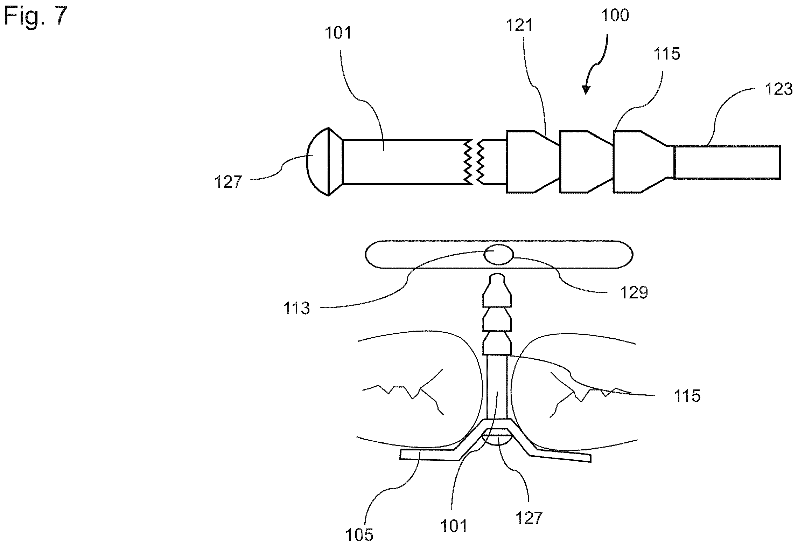

Fig. 7 zeigt eine vergrößerte Ansicht eines weiteren Befestigungssystems 100 für ein Dentalobjekt. Der Querverbinder 101 ist durch einen Silikonstift gebildet, der durch den Zahnzwischenraum 103 geschoben wird und dort befestigt wird. Der Silikonstift kann dehnbar und zugelastisch sein, so dass dieser durch eine Dehnung verschlankt wird. Dadurch kann der Silikonstift leicht in den Zahnzwischenraum 103 eingeführt werden, wie beispielsweise eine Zahnseide.

Der zylindrische Silikonstift umfasst umlaufende vorstehende Stützränder 115, die in die Öffnung 113 geschoben werden und an denen sich der Öffnungsrand 129 der Öffnung 113 abstützt. In dieser Position wird Querverbinder 101 an dem Stützelement 105 befestigt. Damit der Querverbinder 101 leichter in die Öffnung 113 eingeschoben werden kann, umfasst dieser einen konischen Abschnitt 121, über den der Öffnungsrand 129 auf den Stützrand 115 gleitet.

Vor dem konischen Abschnitt 121 umfasst der Querverbinder 101 einen herausstehenden Einfädelabschnitt 123 zum Einfädeln des Querverbinders 101 in die Öffnung 113. Der Einfädelabschnitt 123 ist ausreichend lang und kann nach einem Befestigen des Querverbinders 101 durch Kürzen angepasst werden. Zudem umfasst der Querverbinder 101 einen seitlich überstehenden Kopf 127, durch den die Zugkräfte auf das Stützelement 105 übertragen werden können.

Auf diese Weise kann ein Befestigungssystem 100 nach dem Fangdübel-Prinzip realisiert werden, das schnelle und einfache Befestigungen sowohl an grazilen als auch voluminösen Zähnen 107-1, 107-2 und 107-3 ermöglicht. Das Befestigungssystem 100 vermeidet eine Schädigung der Zahnhartsubstanz, da Haltkräfte gezielt eingestellt werden können.

Der elastische Silikonstift des Querverbinders 101 schützt zudem vor einer Überlastung. Das Risiko eines Verschluckens oder einer Aspiration des Befestigungssystems 100 kann ausgeschlossen werden. Zudem ist eine einfache Reinigung abgedeckter Areale aufgrund des flexiblen Silikonstiftes möglich.

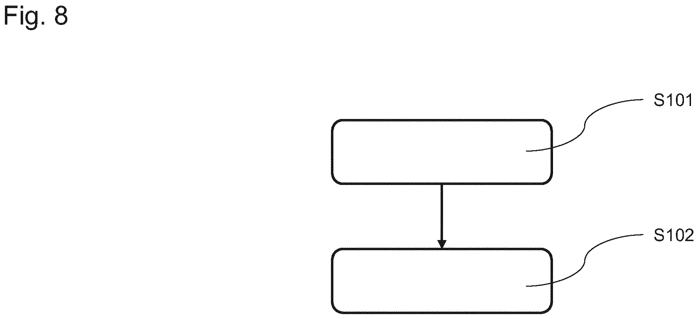

Fig. 8 zeigt ein Blockdiagramm eines Verfahrens zum Befestigen eines Dentalobjekts. Im Schritt S101 wird der Querverbinder 101 durch den Zahnzwischenraum 103 hindurchgeführt. Im Schritt S102 wird der Querverbinder 101 durch das Stützelement 105 zum Abstützen an den Zähnen 107-1, 107-2 seitlich des Zahnzwischenraums 103 abgestützt.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Befestigungssystem
- 101: Querelement
- 103: Zahnzwischenraum
- 105: Stützelement
- 107: Zahn
- 109: Sägezahnprofil
- 111: Rastmittel
- 113: Öffnung
- 115: Stützrand
- 117: Steckmechanismus
- 119: Dentalsensor
- 121: Konischer Abschnitt
- 123: Einfädelabschnitt
- 125: Drehverbindung
- 127: Kopf
- 129: Öffnungsrand
- 131: Kanal
- 133: Durchgangsöffnung
- 135: Kanal

## Patentansprüche

1. Dentalsensor (119) mit einem Befestigungssystem (100) für den Dentalsensor, mit:
einem Querverbinder (101) zum Durchführen durch einen Zahnzwischenraum (103); und
einem Stützelement (105) zum Abstützen des Querverbinders (101) an den Zähnen (107-1, 107-2) seitlich des Zahnzwischenraums (103).

2. Dentalsensor (119) mit einem Befestigungssystem (100) nach Anspruch 1, wobei der Querverbinder (101) ein Sägezahnprofil (109) oder ein Gewinde zum Aufdrehen einer Mutter aufweist.

3. Dentalsensor (119) mit einem Befestigungssystem (100) nach Anspruch 2, wobei Stützelement (105) ein Rastmittel (111) zum Eingreifen in das Sägezahnprofil (109) des Querverbinders (101) aufweist.

4. Dentalsensor (119) mit einem Befestigungssystem (100) nach Anspruch 1, wobei zwischen dem Querverbinder (101) und dem Stützelement (105) eine Drehverbindung (125) angeordnet ist.

5. Dentalsensor (119) mit einem Befestigungssystem (100) nach einem der vorangehenden Ansprüche, wobei das Stützelement (105) eine Keilform aufweist.

6. Dentalsensor (119) mit einem Befestigungssystem (100) nach einem der vorangehenden Ansprüche, wobei der Querverbinder (101) zugelastisch und/oder der Querverbinder (101) bandförmig oder stiftförmig ist.

7. Dentalsensor (119) mit einem Befestigungssystem (100) nach einem der vorangehenden Ansprüche, wobei der Querverbinder (101) und/oder das Stützelement (105) porös ausgestaltet sind.

8. Dentalsensor (119) mit einem Befestigungssystem (100) nach einem der vorangehenden Ansprüche, wobei der Querverbinder (101), der Dentalsensor (119) und/oder ein Sensorgehäuse ein oder mehrere Kanäle umfasst.

9. Dentalsensor (119) mit einem Befestigungssystem (100) nach einem der vorangehenden Ansprüche, wobei der Querverbinder (101) ein weiteres Stützelement (105-1, 105-2) zum Abstützen an den Zähnen (107-1, 107-2, 107-3) umfasst.

10. Dentalsensor (119) mit einem Befestigungssystem (100) nach einem der vorangehenden Ansprüche, wobei der Querverbinder (101) und/oder die Stützelemente (105-1, 105-2) einen Steckmechanismus (117) zum Aufstecken des Dentalsensors umfasst.

11. Dentalsensor (119) mit einem Befestigungssystem (100) nach einem der vorangehenden Ansprüche, wobei das Stützelement (105) eine Öffnung (113) zum Durchführen des Querverbinders (101) umfasst.

12. Dentalsensor (119) mit einem Befestigungssystem (100) nach Anspruch 11, wobei der Querverbinder (101) einen umlaufenden Stützrand (115) zum Abstützen an einem Öffnungsrand (129) umfasst.

13. Dentalsensor (119) mit einem Befestigungssystem (100) nach Anspruch 12, wobei der Querverbinder (101) einen konischen Abschnitt (121) zum Einführen des Stützrandes (115) in die Öffnung (113) umfasst.

14. Dentalsensor (119) mit einem Befestigungssystem (100) nach einem der vorangehenden Ansprüche, wobei der Querverbinder (101) einen Einfädelabschnitt (123) zum Einfädeln des Querverbinders (101) in die Öffnung umfasst.

15. Dentalsensor (119) mit einem Befestigungssystem (100) nach einem der vorangehenden Ansprüche, wobei das Stützelement (105) derart elastisch ist, dass sich dieses durch einen Zug des Querverbinders (101) in den Zahnzwischenraums (103) bewegt.

## Claims

1. A dental sensor (119) having a fastening system (100) for the dental sensor, comprising:
a transverse connector (101) for passing through an interdental space (103); and
a support element (105) for supporting the transverse connector (101) on the teeth (107-1, 107-2) laterally of the interdental space (103).

2. The dental sensor (119) having a fastening system (100) according to claim 1, wherein the transverse connector (101) comprises a sawtooth profile (109) or a thread for screwing on a nut.

3. The dental sensor (119) having a fastening system (100) according to claim 2, wherein the support element (105) comprises a latching means (111) for engaging the sawtooth profile (109) of the transverse connector (101).

4. The dental sensor (119) having a fastening system (100) according to claim 1, wherein a rotary joint (125) is arranged between the transverse connector (101) and the support element (105).

5. The dental sensor (119) having a fastening system (100) according to any one of the preceding claims, wherein the support element (105) has a wedge shape.

6. The dental sensor (119) having a fastening system (100) according to any one of the preceding claims, wherein the transverse connector (101) is tenso-elastic and/or the transverse connector (101) is band-shaped or pin-shaped.

7. The dental sensor (119) having a fastening system (100) according to any one of the preceding claims, wherein the transverse connector (101) and/or the support element (105) are configured to be porous.

8. The dental sensor (119) having a fastening system (100) according to any one of the preceding claims, wherein the transverse connector (101), the dental sensor (119) and/or a sensor housing comprises one or more channels.

9. The dental sensor (119) having a fastening system (100) according to any one of the preceding claims, wherein the transverse connector (101) comprises a further support element (105-1, 105-2) for supporting on the teeth (107-1, 107-2, 107-3).

10. The dental sensor (119) having a fastening system (100) according to any one of the preceding claims, wherein the transverse connector (101) and/or the support elements (105-1, 105-2) comprise a plug-in mechanism (117) for plugging on the dental sensor.

11. The dental sensor (119) having a fastening system (100) according to any one of the preceding claims, wherein the support element (105) comprises an opening (113) for passing through the transverse connector (101).

12. The dental sensor (119) having a fastening system (100) according to claim 11, wherein the transverse connector (101) comprises a circumferential support edge (115) for supporting on an opening edge (129).

13. The dental sensor (119) having a fastening system (100) according to claim 12, wherein the transverse connector (101) comprises a tapered portion (121) for inserting the support edge (115) into the opening (113).

14. The dental sensor (119) having a fastening system (100) according to any one of the preceding claims, wherein the transverse connector (101) comprises a threading portion (123) for threading the transverse connector (101) into the opening.

15. The dental sensor (119) having a fastening system (100) according to any one of the preceding claims, wherein the support element (105) is elastic such that it moves into the interdental space (103) by pulling the transverse connector (101).

## Revendications

1. Capteur dentaire (119) avec un système de fixation (100) pour le capteur dentaire, comprenant :
un connecteur transversal (101) pour passer à travers un espace interdentaire (103) ; et
un élément de support (105) pour soutenir le connecteur transversal (101) sur les dents (107-1, 107-2) latéralement à l'espace interdentaire (103).

2. Capteur dentaire (119) avec un système de fixation (100) selon la revendication 1, où le connecteur transversal (101) présente un profil en dents de scie (109) ou un filetage pour visser un écrou.

3. Capteur dentaire (119) avec un système de fixation (100) selon la revendication 2, où l'élément de support (105) comprend un moyen d'encliquetage (111) pour s'engager dans le profil en dents de scie (109) du connecteur transversal (101).

4. Capteur dentaire (119) avec un système de fixation (100) selon la revendication 1, où une liaison pivot (125) est disposée entre le connecteur transversal (101) et l'élément de support (105).

5. Capteur dentaire (119) avec un système de fixation (100) selon l'une des revendications précédentes, où l'élément de support (105) présente une forme de coin.

6. Capteur dentaire (119) avec un système de fixation (100) selon l'une des revendications précédentes, où le connecteur transversal (101) est élastique en traction et/ou le connecteur transversal (101) est en forme de bande ou de tige.

7. Capteur dentaire (119) avec un système de fixation (100) selon l'une des revendications précédentes, où le connecteur transversal (101) et/ou l'élément de support (105) sont conçus de manière poreuse.

8. Capteur dentaire (119) avec un système de fixation (100) selon l'une des revendications précédentes, où le connecteur transversal (101), le capteur dentaire (119) et/ou un boîtier de capteur comprend un ou plusieurs canaux.

9. Capteur dentaire (119) avec un système de fixation (100) selon l'une des revendications précédentes, où le connecteur transversal (101) comprend un autre élément de support (105-1, 105-2) pour s'appuyer sur les dents (107-1, 107-2, 107-3).

10. Capteur dentaire (119) avec un système de fixation (100) selon l'une des revendications précédentes, où le connecteur transversal (101) et/ou les éléments de support (105-1, 105-2) comprennent un mécanisme d'emboîtement (117) pour emboîter le capteur dentaire.

11. Capteur dentaire (119) avec un système de fixation (100) selon l'une des revendications précédentes, où l'élément de support (105) comprend une ouverture (113) pour le passage du connecteur transversal (101).

12. Capteur dentaire (119) avec un système de fixation (100) selon la revendication 11, où le connecteur transversal (101) comprend un bord de support périphérique (115) pour s'appuyer sur un bord d'ouverture (129).

13. Capteur dentaire (119) avec un système de fixation (100) selon la revendication 12, où le connecteur transversal (101) comprend une portion conique (121) pour l'insertion du bord de support (115) dans l'ouverture (113).

14. Capteur dentaire (119) avec un système de fixation (100) selon l'une des revendications précédentes, où le connecteur transversal (101) comprend une portion d'enfilage (123) pour enfiler le connecteur transversal (101) dans l'ouverture.

15. Capteur dentaire (119) avec un système de fixation (100) selon l'une des revendications précédentes, où l'élément de support (105) est suffisamment élastique pour se déplacer dans l'espace interdentaire (103) sous l'effet d'une traction du connecteur transversal (101).
